# EUROPEAN PATENT APPLICATION

(11) **EP 2 916 270 A1**
(43) Date of publication of application: **09.09.2015**
(21) Application number: 14382077.7
(22) Date of filing: 04.03.2014
(51) Int. Cl.: G06Q 10/06

(54) **Smart process management**

(71) Applicant: The Boeing Company, Chicago, IL 60606-2016 (US)
(72) Inventor: Rodriquez, Rosa Maria, 28043 Madrid (ES); Pérez, Victor, 28045 Madrid (ES); Muñoz, Antonio González, 18071 Granada (ES); Pérez Rodriguez, Raúl, 18071 Granada (ES); Castillo Vidal, Luis, 18071 Granada (ES); Morales Reynaga, Lluvia Carolina, Oaxaca (MX)
(74) Representative: Boult Wade Tennant

(57) **Abstract**

The invention provides a computer-implemented method of processing information for use when producing a mission plan to accomplish a mission, in which information relating to one or more resources, which information comprises uncertainty, is transformed so as to reduce the uncertainty in the information, such that the transformed information is more suitable for use by a hierarchical task network smart process manager to produce the mission plan. Such information relating to the one or more resources comprises one or more attribute scores relating to execution time, execution cost, efficiency and/or availability, and such transformation comprises one or more of application of a threshold test and application of a weighted sum calculation, based on the attribute scores.

## Description

The present invention relates to a computer-implemented method of processing information for use when producing a mission plan to accomplish a mission, and a corresponding system, computer program and computer-readable medium.

### Background

Planning is the process of finding a course of action which can be executed to achieve some goal. Artificial Intelligence (Al) techniques have been applied to solve real-world planning problems by assisting in smart process management, i.e. the production of a plan of action (or process) for accomplishing a mission, based upon input knowledge comprising knowledge of the current state of associated real-world entities. Such a plan of action (also termed a mission plan) typically comprises one or more sequential and/or parallel sequences of actions (or mission steps) specified to be performed at particular times, such that by following the plan of action a desired end state will be approached, e.g. the mission will be at least partly accomplished.

Smart Process Management (SPM) techniques (otherwise known as Artificial Intelligence Planning and Scheduling techniques) are an example of Artificial Intelligence techniques for the solution of planning problems. A SPM typically receives one or more mission goals, and input knowledge regarding the current state of one or more resources, and using that input knowledge the SPM produces a plan of action for carrying out the mission goals.

Hierarchical Task Network (HTN) Smart Process Management (SPM) techniques are acknowledged as one of the most efficient of such Artificial Intelligence techniques. A problem exists that existing HTN SPM techniques do not work satisfactorily when the input knowledge is imperfect or incompletely known (e.g. in so-called "real-world" situations, when the input knowledge is subject to or includes uncertainty, vagueness, lack of precision, and/or incompleteness, and actions are not completely deterministic, i.e. the result of carrying out an action cannot be completely predicted). So-called "classical" planning techniques typically make simplifying assumptions, one of which is to consider that initial state parameters are fully determined, and another of which is to consider that after performing an action the resulting state can be predicted with complete certainty. These assumptions do not apply well to so-called "real-world" planning problems, and thus planning techniques (e.g. theory and algorithms) for planning in such "real-world" situations are more complex than classical techniques.

Although a few existing HTN techniques are able to cope somewhat with imperfect knowledge, all of those few are focused on reactive problems such as robotics, and none of them have been effective in relation to deliberative processes such as Smart Process Management. Non-HTN techniques are generally less efficient than HTN techniques and have only very limited capabilities when dealing with real-world problems. Thus, the availability of efficient Al techniques for Smart Process Management of real-world problems is currently limited.

### Summary

An object of the present invention is to at least address the above-identified problem(s) with the prior art. The disclosure of the present application includes aspects, embodiments and examples which address the above-identified problem(s) and associated problems. Features of aspects and embodiments of the invention are set out in the appended claims which define the invention.

In a first aspect of the invention there is provided a computer-implemented method of processing information for use when producing a mission plan to accomplish a mission, the method comprising: obtaining one or more mission goals to be achieved during execution of the mission; obtaining information relating to one or more resources that may be used during execution of the mission, wherein the information relating to at least one of the resources includes uncertainty; obtaining user preferences relating to how the uncertainty is to be handled; transforming the information relating to the one or more resources according to the user preferences to reduce the uncertainty in the information; and providing the transformed information to a smart process manager, for use by the smart process manager to identify one or more of the resources that may be used either alone or in combination to execute at least one mission step as part of at least one mission plan to achieve the one or more mission goals, thereby accomplishing the mission.

Optionally, the method further comprises: identifying, based on the transformed information, one or more of the resources that may be used in at least one mission step as part of at least one mission plan for accomplishing the mission goals; producing, based on the identified resources, at least one mission plan for accomplishing the mission goals; and providing the at least one mission plan to a user.

Optionally, the information for each resource comprises at least an execution time that indicates the time for the resource to execute its part of the mission, an execution cost that indicates the cost for the resource to execute its part of the mission, an availability score that indicates the level of availability of the resource to execute its part of the mission, and an efficiency score that indicates the level of efficiency of the resource when executing its part of the mission.

Optionally, the step of obtaining user preferences comprises obtaining one or more threshold values, each threshold value relating to one of the execution cost, the execution time, the efficiency score and the availability score; and transforming the information comprises one or more of: if a cost threshold value is obtained, transforming the execution cost for each resource to an absolute indication of cost corresponding to whether or not that resource is costly by comparing the execution cost to the cost threshold value; if a time threshold value is obtained, transforming the execution time for each resource to an absolute indication of time corresponding to whether that resource is fast or slow by comparing the execution time to the time threshold value; if an availability threshold value is obtained, transforming the availability score for each resource to an absolute indication of availability corresponding to whether or not that resource is available by comparing the availability score to the availability threshold value; and if an efficiency threshold value is obtained, transforming the efficiency score for each resource to an absolute indication of efficiency corresponding to whether or not that resource is efficient or inefficient by comparing the efficiency score to the efficiency threshold value.

Optionally, the smart process manager identifies as useable, to execute the at least one mission step as part of the at least one mission plan, only resources having at least one of and preferably all of: an absolute indication of availability indicating that the resource is available; an absolute indication of efficiency indicating that the resource is efficient; an absolute indication of execution cost indicating that the resource is not costly; and an absolute indication of execution time indicating that the resource is not slow.

Optionally: the step of obtaining user preferences comprises obtaining weighting factors to be applied to one or more of the execution time, execution cost, availability score and efficiency score; and the step of transforming the information relating to the one or more resources according to the user preferences to reduce the uncertainty in the information comprises aggregating the execution time, execution cost, availability score and efficiency score for each resource as a weighted combination using the weighting factors thereby providing an overall resource score for each resource, and the transformed information comprises the overall resource score for each resource.

Optionally, providing the transformed information comprises providing to the smart process manager only the transformed information of those resources which have an overall resource score greater than a resource score threshold value, such that only resources having an overall resource score greater than the resource score threshold can be considered by the smart process manager for inclusion in the at least one mission plan.

Optionally the method further comprises, for each of the at least one mission plan, totalling the resource scores for each of the resources used in the respective mission plan to produce a respective mission score associated with that mission plan.

Optionally the method further comprises providing the at least one mission plan to a user, ranked in an order based upon the associated mission score for each mission plan.

Optionally only those mission plans having an associated mission score which is greater than a mission score threshold value are provided to the user.

Optionally, for each resource: the information relating to that resource comprises an assumed location of that resource; and obtaining information comprises deriving at least one of the execution time and the execution cost for a respective resource using the assumed location of that resource.

Optionally, each assumed location has an associated radius of uncertainty, and obtaining user preferences further comprises obtaining from the user an indication as to the optimism to be associated with the assumed locations; and the deriving is further based upon the indicated optimism and a respective radius of uncertainty associated with the assumed location of the respective resource.

Optionally, for each resource: if indicated as most optimistic, the calculating comprises calculating a minimum possible execution time and/or a minimum possible execution cost, based on that resource's assumed location, that resource's associated radius of uncertainty, and a location of a target which is involved in the mission; and if indicated as least optimistic, the calculating comprises calculating a maximum possible execution time and/or a maximum possible execution cost, based on that resource's assumed location, that resource's associated radius of uncertainty, and a location of a target which is involved in the mission.

Optionally the method further comprises the steps of: executing a mission step of the at least one mission plan; and updating at least one of the assumed location and the radius of uncertainty for at least one resource which was used in the executed mission step, and providing the updated assumed location and/or radius of uncertainty of the assumed location to the smart process manager for production of a further mission step and/or an updated mission plan based on the updated assumed location and/or radius of uncertainty of the assumed location.

Optionally the method further comprises identifying which of the obtained information relating to at least one of the resources includes uncertainty, and wherein the transforming comprises transforming only the identified information.

In a second aspect of the invention there is provided a system comprising a processor and a memory, the memory storing instructions which when executed by the processor cause the processor to carry out any of the methods described above.

In a third aspect of the invention there is provided a computer program comprising instructions which, when executed by a processor, cause the processor to carry out any of the methods described above.

In a fourth aspect there is provided a computer-readable medium storing instructions which, when executed by a processor, cause the processor to carry out any of the methods described above.

### Description of the Figures

In order that the present invention may be more readily understood, preferred embodiments will now be described, by way of example only, with reference to the accompanying drawings in which:
Figure 1 is a process flow diagram showing a method of processing information for use when producing a mission plan to accomplish a mission, the method according to a first embodiment.
Figure 2 is a process flow diagram showing a method of processing information for use when producing a mission plan to accomplish a mission, the method according to a second embodiment wherein a threshold is applied to uncertain input knowledge in order to reduce uncertainty in the input knowledge.
Figure 3 is a process flow diagram showing a method of processing information for use when producing a mission plan to accomplish a mission, the method according to a third embodiment wherein an aggregate "resource score" for at least one particular resource is produced by multiplying each of a plurality of uncertain input knowledge values associated with the particular resource by a respective weighing factor, and summing the results.
Figure 4 is a process flow diagram showing a method of processing information for use when producing a mission plan to accomplish a mission, in which the method of the third embodiment is performed on input knowledge values which are optionally pre-processed before being aggregated, and/or the aggregate "resource scores" for each of the respective resources are optionally post-processed before being provided to a smart process manager for producing a mission plan.
Figure 5 is a process flow diagram showing a method of processing information for use when producing a mission plan to accomplish a mission, the method according to a fourth embodiment in which a user preference is first obtained as to which of a threshold and/or aggregating method is to be used to reduce imperfection in input knowledge.
Figure 6 is an example Graphical User Interface (GUI) for obtaining user preference(s), such as input weighting factors and/or threshold value(s) for use in the described embodiments.
Figure 7 is a process flow diagram showing a method of processing information for use when producing a mission plan to accomplish a mission, in which the method of any of Figures 1 to 5 is carried out, and wherein execution time and/or execution cost scores are derived from an assumed location of a particular resource and a level of optimism regarding certainty of the assumed location.

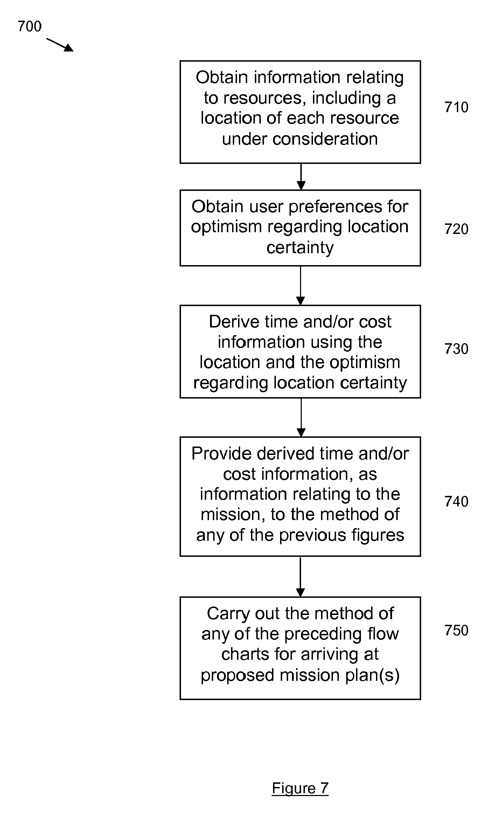

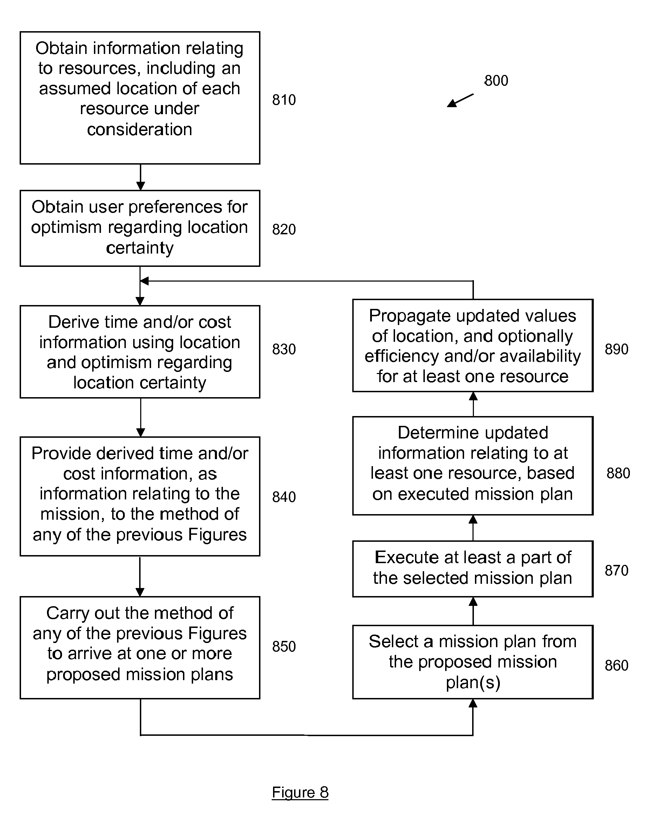

Figure 8 is a process flow diagram showing a method of processing information for use when producing a mission plan to accomplish a mission, in which the method of Figure 7 is augmented by determining a changed value and/or changed uncertainty of one or more of the input information relating to a resource, as a result of performing one or more steps of the mission plan, wherein the method further includes propagating the changed value and/or changed uncertainty back into a further iteration of the method as updated input information relating to the resource for use in producing successive mission plan steps.
Figure 9 is a graphical depiction of uncertainty in the assumed location of a particular resource associated with a mission plan, and uncertainty in the location of a target associated with the mission plan, showing optimistic and pessimistic distances between the resource and target.
Figure 10 is a graphical depiction of uncertainty in the assumed location of a particular resource associated with a mission plan, as that resource progresses from a first location A to a destination location B.
Figure 11 is a graphical plot of the uncertainty in the assumed location of the resource as shown in Figure 10.
Figure 12 illustrates a number of conceptual modules, which can be implemented in software or hardware, comprised in a system arranged to carry out the method(s) of the described embodiments.
Figure 13 is an example computer system which can be employed to implement embodiments of the invention.
Figure 14 is an example of a computing device suitable for implementing embodiments of the invention.

### Detailed description of an embodiment

A Hierarchical Task Manager / Smart Process Manager (HTN SPM, also termed a HTN Intelligent Planner/Scheduler) is, by way of example, a software component which typically receives (a) one or more mission goals, and (b) input knowledge regarding the current state of one or more resources, and using that input knowledge produces a plan of action (mission plan) for carrying out the mission goals and thus accomplishing the mission.

As mentioned, existing HTN SPMs generally do not satisfactorily deal with imperfect input knowledge. The inventors have realised that the imperfections comprised in input knowledge used by an SPM for producing a mission plan include: imperfect knowledge about the availability of resources involved in the plan; imperfect knowledge about the location of the resources; and imperfect knowledge about the efficiency of the resources within an effect-oriented framework. Such imperfections can be termed "uncertainty" (e.g. uncertainty as to the accuracy and/or precision of the input knowledge) and can be represented in terms of measures of possibility, probability, belief and plausibility.

In embodiments, the present disclosure allows an HTN SPM to be successfully used with imperfect input knowledge, e.g. input knowledge which includes uncertainty, otherwise termed "uncertain" input knowledge. This is achieved by transforming the uncertain input knowledge to input knowledge which is deemed to be completely known, by the use of specific mathematical operations, and supplying the transformed input knowledge to the HTN SPM, thereby allowing the use of uncertain knowledge as a source of input knowledge to the HTN SPM. Thus, those types of existing HTN SPM which were previously unable to satisfactorily deal with uncertain input knowledge are enabled to be used with uncertain input knowledge, and thereby the applicability of HTN SPM techniques is widened. As a result, the efficiency of production of mission plans is improved due to the availability for use of HTN SPMs (which are generally more efficient than non-HTN-SPMs) in the above-mentioned situations where their use was not previously practical.

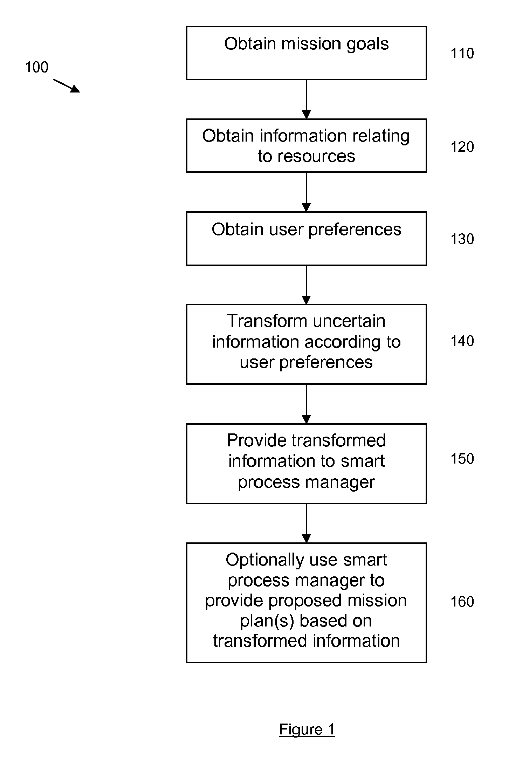

In an embodiment described herein with reference to Figure 1, a method for producing a mission plan to accomplish a mission comprises the following steps. At step 110, one or more mission goals to be achieved during execution of the mission are obtained. For example, a user might specify a mission goal that an item is to be fetched from a first location and taken to a second location. The nature of the item might further imply certain properties of a resource to be used in carrying out the mission, for example if the item is large then a resource such as a transporter vehicle might implicitly require a certain carrying capacity.

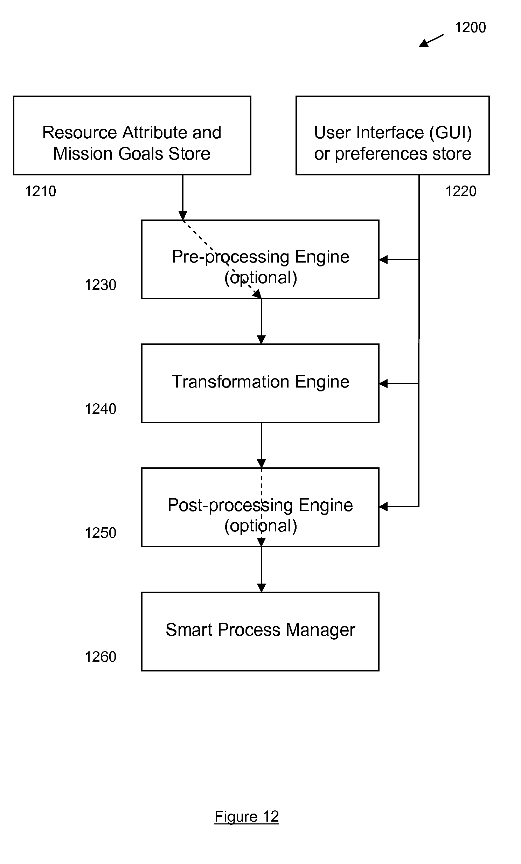

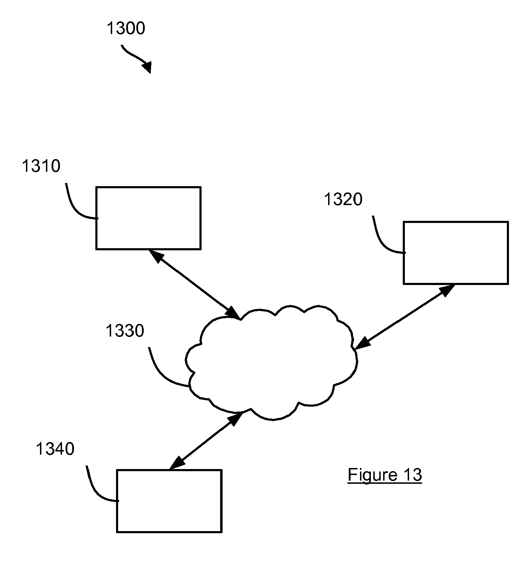

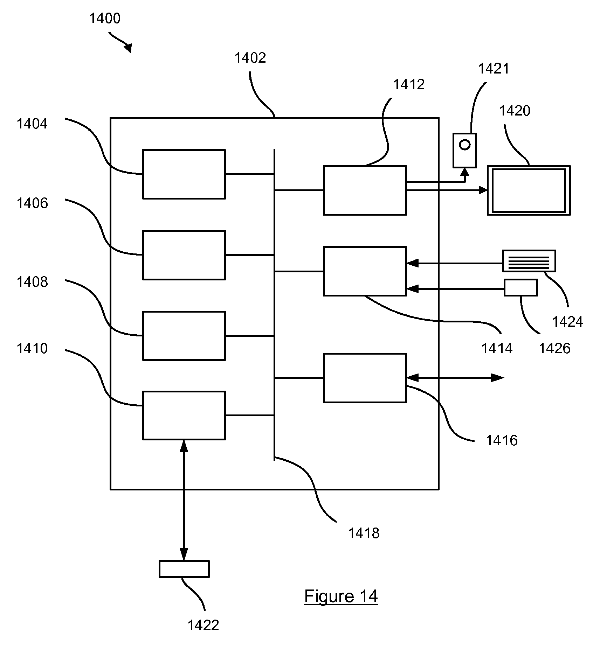

In step 120, information relating to one or more resources that may be used during execution of the mission is obtained, e.g. via a user interface, storage device or network interface as previously mentioned for the mission goals. By way of example, such information relating to each resource may comprise one or more "attribute scores" each relating to an attribute of the respective resource, for example an execution time score that indicates the relative speed of operation of the respective resource when compared to a reference speed (e.g. a reference speed might be the speed of a nominal reference resource, which may be for example an averagely performing resource), and thus the execution time score provides an indication of the time for the respective resource to execute a part of the mission. Similarly, the information relating to each resource may additionally or alternatively comprise the following other attribute scores: an execution cost score that provides an indication of the cost for the respective resource to execute a part of the mission (relative to a reference cost, e.g. relative to a cost for a reference resource to carry out the part of the mission or a part of a reference mission); an availability score that provides an indication of the availability of the respective resource to execute a part of the mission; and an efficiency score that provides an indication of the efficiency of the respective resource when executing a part of the mission. By way of example, execution cost may be an economic cost of operating the resource (for example, the cost expressed in US Dollars or Euros, including fuel cost and staffing salaries) when carrying out a nominal task, execution time may be the time in hours for the resource to complete a nominal task, and efficiency and availability may be represented as a number in an interval between 0 and 1, where 1 represents "efficient" or "available", and 0 represents "inefficient" and "unavailable", while for example 0.7 represents "apparently available but with no full guarantee". It may be beneficial if the execution cost and execution time scores are normalised to an interval between 0 and 1, so that they carry equal weight compared with the efficiency and availability scores. In an example hardware/software implementation shown in Figure 12, the attribute scores and mission goals are obtained from storage device 1210, although in other embodiments the attribute scores and mission goals can be obtained over a network or directly from user input, e.g. via User Interface 1220. In certain example implementations, the described method may be implemented using a computer 1310, 1400 as shown in Figures 13 and 14, in which, for example, the attribute scores and/or mission goals can be obtained via user interface 1414, or from a storage device such as storage medium 1404, or via a network interface such as network interface 1416. The example implementations of the methods described herein with reference to Figures 1 to 5 and 7 to 8 will be further described below, however it will be appreciated that any suitable hardware and/or software arrangement may be used to implement the methods described herein, thus many variations on the example implementations shown in Figures 12 to 14 are possible, without implication of any limitation except those set out in the appended claims.

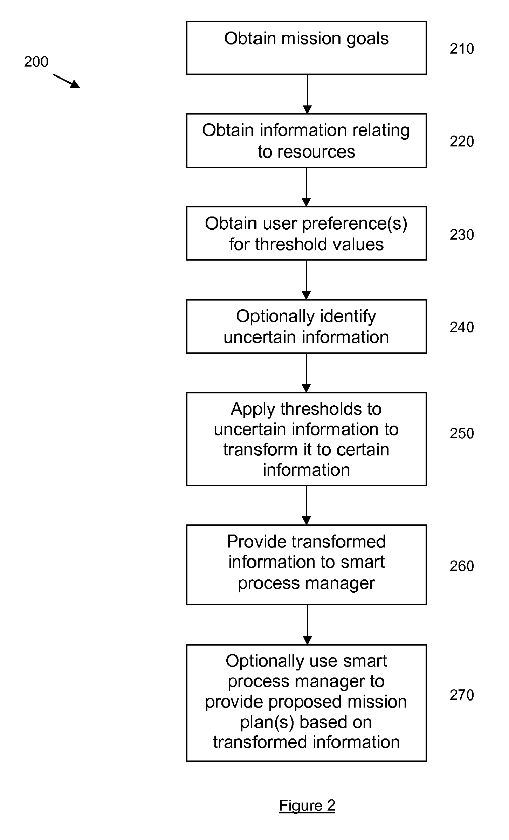

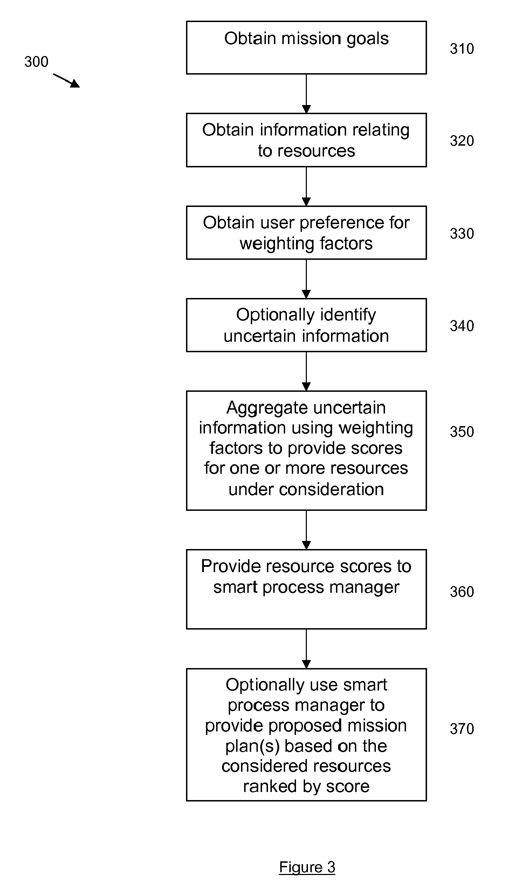

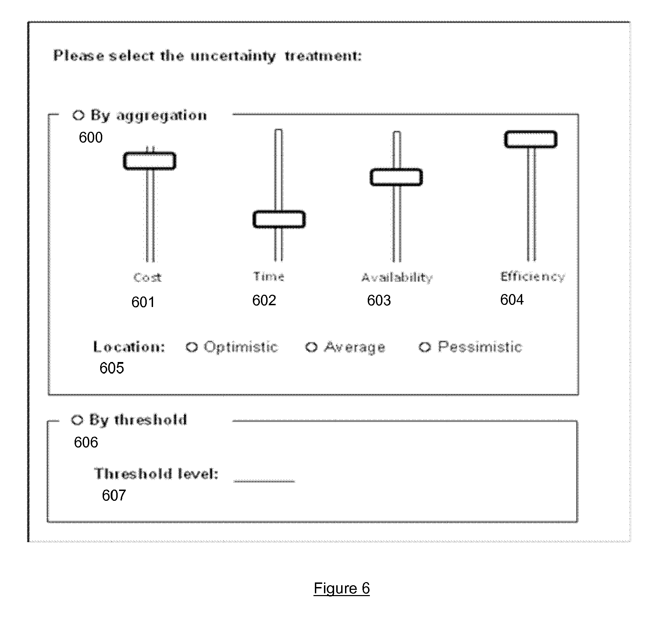

At step 130, at least one user preference is obtained as to how the aforementioned uncertainty in the information relating to the resources (which includes the attribute scores) should be handled: in an embodiment as shown in Figure 6, a Graphical User Interface (GUI) for a computer allows a user to enter a preference as to whether a "threshold" method as described below with reference to Figure 2 should be used to handle the uncertainty, or whether an "aggregation" method as described below with reference to Figure 3 should be used, or a combination of both methods. In Figure 6, which shows an example Graphical User Interface (GUI) for use by a user to enter their preferences, elements 600 and 606 are clickable buttons which allow a user to select either the "threshold" method or the "aggregation" method by any suitable method, such as a mouse click or touch screen activation. The GUI is shown by way of example as element 1220 in the system block diagram shown in Figure 12.

At step 140, the information relating to the one or more resource is transformed (e.g. by transformation engine 1240), according to the user preferences, so as to reduce the uncertainty in the information. For example, if the obtained user preferences specify that uncertainty should be handled by applying the "threshold" method as described below with reference to Figure 2, then the information is transformed using the "threshold" method described below, thereby reducing the uncertainty in the information. Alternatively, if the obtained user preferences specify that the "aggregation" method as described below with reference to Figure 3 should be used, then the information is transformed using the "aggregation" method, thereby deriving information with reduced uncertainty. Thus, transformed information is derived which can be used by a smart process manager to select resources for use in producing a mission plan. Alternatively, a combination of those two methods can be specified by the user, and/or other transformation methods described herein can be applied.

At step 150 the transformed information relating to the one or more resources is provided to a smart process manager (SPM) 1260, which is advantageously a Hierarchical Task Network Smart Process Manager (HTN-SPM).

Optionally at step 160 the smart process manager 1260 operates using the transformed information relating to the one or more resources, and the mission goals, so as to produce at least one proposed mission plan for accomplishing the mission goals. The provision to the smart process manager of transformed information relating to the one or more resources, which transformed information includes reduced or eliminated uncertainty, improves the compatibility of the information with HTN-SPMs. From the transformed information and mission goals, the SPM is able to determine which of the resources (to which the information relates) is suitable (or preferable) for including in the at least one mission plan to accomplish the mission goals. A typical SPM then prepares the at least one mission plan using at least one of the resources which are determined to be suitable or preferable. The at least one mission plan is then optionally presented to a user for selection, e.g. using GUI 1220. The selected mission plan can then be executed to achieve the mission goals and thereby accomplish the mission.

In an embodiment as described herein with reference to Figure 2, the aforementioned "threshold method" will now be described. As in the general embodiment described above with reference to Figure 1, mission goals are obtained in step 210, and information relating to one or more resources that may be used during execution of the mission is obtained at step 220, similarly to steps 110 and 120 of the embodiment shown in Figure 1. At step 230, user preferences are obtained for a threshold value to be applied to each of the execution time score, execution cost score, availability score, and efficiency score. Figure 6 shows a Graphical User Interface (GUI) which can be used to allow a user to select the "threshold" method (using the "By threshold" button 606) and to allow the user to enter the threshold value ("Threshold level" 607). Threshold values can be given, for example, as percentages of a maximum value, or as an absolute value. Although in the embodiment shown in Figure 6, a single threshold value is entered by the user and applied in common to all of the execution time score, execution cost score, availability score, and efficiency score, in other embodiments multiple threshold values (e.g. separate respective threshold values corresponding to each of the attribute scores) can be entered by the user and applied to respective subsets of the attribute scores. In the illustrated example, text entry field 607 is used to allow a user to enter his or her preferences, however other types of input means could be used or the threshold value(s) could be stored in memory or retrieved across a network.

Step 240 is an optional step, and will be described below once the following step 250 has been explained.

At step 250, a "thresholding" operation is carried out on each score by comparing each score to its applicable threshold value so as to transform the score to an absolute indication of whether or not the corresponding resource possesses the property indicated by the score. By way of example, for the efficiency score, if the result of the comparison of the efficiency score with the applicable threshold is that the efficiency score is greater than the respective threshold then the resource is deemed to be efficient, otherwise the resource is deemed to be inefficient. Similarly, for the availability score, if the result of the comparison is that the availability score is greater than its respective threshold then the resource is deemed to be available, otherwise the resource is deemed to be unavailable. A similar comparison is made between the execution cost score and its respective threshold, and between the execution time score and its respective threshold. The results of those comparisons are absolute indications of whether or not the resource is costly and whether or not the resource is slow, respectively. In this way, probability distributions and possibility distributions for multivalued ranges are transformed into Boolean facts represented by 0 or 1 values. These facts, when passed to the smart process manager, are treated as known, classical, facts and thus the smart process manager is not itself required to deal with uncertainty.

In the following example situation shown in Table 1, the availability of a rescue team is considered. The availability score for the rescue team resource is transformed using the "threshold" method to an absolute indication of availability of the rescue team. In the example, the availability score is 0.3, and a user has set a corresponding threshold value of 0.7. Since the availability score is below the threshold value, the absolute indication of availability given to the rescue team resource is 0, indicating that the rescue team resource is not available. It can clearly be seen that, in effect, by setting a threshold the user can set the level of uncertainty which they are willing to accept. For example, a user can initially decide that "it is convenient to use resources with a high degree of availability", however, if, having set the threshold(s) accordingly, the smart process manager is unable to produce a plan (e.g. due to none of the resources meeting the set criteria) then the user can revise the threshold preferences and try again.

### Example

**Table 1.**

| **Resource** | **Parameter** | **Value** | **Threshold defined by the user** | **SPM treatment of the values** | **Final value for resource** |
|---|---|---|---|---|---|
| Rescue team A | availability | 0.3 | 0.7 | values between 0 and 0.7 (not included} equal to 0 (not available) | Rescue team A availability equal to 0 . |
| | | which means for example: Team A was occupied in other emergency and it is not sure it is fully available | Any rescue team with a value of uncertainty under 0.7 cannot be considered in the planning. | | |
| | | | | | **NOT available** |
| | | | | Values between 0.7 (included) and to 1 (available) | and not considered for the planning |

Returning to the optional step 240, the uncertain information relating to the one or more resources may be identified before carrying out the "thresholding" operation of step 250, such that the thresholding operation may be carried out only on the identified uncertain information. By implication, information which has not been identified as uncertain is deemed to be certain, and by not applying the thresholding operation to information which is certain (which thus does not require transformation before use with an HTN-SPM), processing effort is reduced and efficiency is increased.

At step 260 the transformed information is provided to a smart process manager for use in determining which resources to select for carrying out a mission. Optional step 270 shows the use (or invocation/execution) of the smart process manager to produce one or more candidate mission plans for carrying out the mission goals. Optionally, a user may select a particular mission plan from the one or more candidate mission plans, e.g. the one or more candidate mission plans can be presented to the user, and the user can then make their selection, using user interface 1220.

When transforming the uncertain information relating to resources, it is noted that efficiency and availability are positive attributes for a resource to have, while costliness and slowness are negative attributes for a resource to have. In this embodiment, a "greater than" test is used for comparing all scores against their respective thresholds, resulting in absolute indications as to whether or not each resource is efficient, available, costly and/or slow. Accordingly, the smart process manager to which the transformed information (in the form of the absolute indications) is passed is correspondingly arranged to take into account the positive or negative nature of each absolute indication when deciding which resources to select for use in the at least one mission plan. For example, the smart process manager will be more inclined to choose resources which are indicated as being efficient and/or available, and less likely to choose resources which are indicated as being costly and/or slow. It will be appreciated, however, that in other embodiments the execution cost score and the execution time score could be compared against their respective thresholds using a "less than" test so as to transform those scores instead into absolute indications of whether or not the resource is cheap and whether or not the resource is fast. Since those are positive attributes, the smart process manager would then be correspondingly arranged to treat all of the transformed information in the same (positive) sense when deciding which resources to select. It will also be understood that rather than a "greater than" test, other embodiments may use a "greater than or equal to" test when comparing the threshold value(s) against the respective efficiency and/or availability scores, and/or a "less than or equal to" test when comparing the threshold value(s) against the respective cost and/or time scores. In such an embodiment, by way of example, a user might set the thresholds for cost and time at relatively low levels, while setting the efficiency and availability values at relatively high values, so as to cause the smart process manager to be more likely to select resources which are relatively cheap, quick, efficient and available. In another example, if ideal resources are relatively scarce, the user could indicate that they are prepared to compromise to some extent on cost, time, and efficiency, but that they require a high level of certainty that the job will get done, by setting thresholds for cost, time and efficiency at medium levels, and setting a relatively high threshold for availability. In certain optional embodiments, one or more of the attribute scores for each particular resource can be normalised so as to be within a particular range (e.g. 0 to 1), for example by dividing the particular attribute score by an "average" or maximum expected value for that attribute score type. Such normalising allows, in embodiments, the corresponding thresholds to have similar magnitudes, and thus can enhance user understanding, e.g. if the thresholds were to be shown on a Graphical User Interface (GUI) such as that shown in Figure 6. Other permutations will be readily apparent in the light of the foregoing description.

Quantizing one or more of the resource attribute scores into a number of defined ranges can optionally be performed by applying a plurality of threshold tests, with progressive threshold values. It will be appreciated that comparing an attribute score to a single threshold value (which has the result of a boolean indication of whether the score is greater than / less than or equal to, or greater than or equal to / less than, the threshold) is a special case of quantizing an attribute score. The number of thresholds (and thus the number of quantization ranges) can advantageously be chosen so as to achieve an appropriate balance between numerical precision/resolution and certainty for each particular score. For example, quantizing into 10 ranges might be considered to give an acceptable precision of 0.1 while also giving an acceptable certainty to the attribute scores, while increasing the number of ranges would result in greater precision but lower certainty.

In an embodiment as described herein with reference to Figure 3, mission goals are obtained at step 310, and information relating to one or more resources that may be used during execution of the mission is obtained at step 320, similarly to steps 110 and 120 of the embodiment shown in Figure 1. At step 330, user preferences for respective weighting factors to be applied to each of the execution time score, execution cost score, availability score, and efficiency score are obtained (e.g. via user interface 1220). Figure 6 illustrates an example Graphical User Interface (GUI) display which can be used by user interface 1220 to allow a user to select the "aggregate" method (using the "By aggregation" selection button 600) and to select weighting factors for each of the execution cost, execution time, availability and efficiency scores (e.g. using "Cost" slider 601, "Time" slider 602, "Availability" slider 603 and "Efficiency" slider 604). The user can thus select weighting factors for each resource attribute, according to how important the user deems each attribute score to be for the purposes of determining the usefulness of a particular resource for completing the mission. In the illustrated embodiment, interactive elements 601-604 of a slider type are used, however other types of input means can be used, or the weighting factors can be stored in memory or retrieved across a network.

Step 340 is an optional step, and will be described below once the following step 350 has been explained.

At step 350, for each resource, an "aggregation" operation is carried out (e.g. by transformation engine 1240) on the attribute scores relating to that resource, as follows. First, each attribute score of the information relating to the respective resource is multiplied by the weighting factor which corresponds to that score. Next, the results of those multiplications are summed, thus arriving at an aggregate score for the respective resource, also termed a "resource score". Each of the resulting resource scores reflects the attributes (efficiency, availability, cost and speed) of the respective resource, weighted by the relative importance of each attribute (by virtue of those scores being multiplied by the user-supplied weighting factors). Positive attributes such as efficiency and availability (where higher scores are more favourable) are given a positive weighting factor, while negative attributes such as execution cost and execution time (where higher scores are less favourable) are given a negative weighting factor, such that when the weighted scores are summed, the result of the summation is a measure of the merits of the respective resource for completing the mission goals.

The weighting factors which the user sets using the GUI of Figure 6 enable the user to influence which resources the smart process manager will choose to execute a given task. For example, not all resources are equally efficient at carrying out a given task (as mentioned, their efficiency scores are represented in the range of 0 to 1 for a nominal task, where 0 represents "inefficient" and 1 represents "efficient", although of course other representations can be used if corresponding changes are made elsewhere in the system and method). By adjusting the weighting factor for efficiency to a relatively high value, the efficiency scores for the resources will be given a relatively large influence on the aggregated resource scores, and thus the smart process manager will be more likely to choose resources which are efficient. Conversely, by adjusting the weighting factor for efficiency to a relatively low value, the efficiency scores for the resources will be given a relatively small influence on the aggregate resource scores, and thus the smart process manager will be more likely to choose resources based on factors other than efficiency. This can be useful, since for example sometimes it may be deemed by a user that it is most important to respond and execute a task quickly, rather than to execute a task efficiently.

By way of example, a particular resource is tagged with the following attributes:
- Execution cost score:: 120 (before normalisation)
- Execution time score:: 20 (before normalisation)
- Availability score:: 0.6
- Efficiency score:: 0.7

Before aggregating the attribute scores, execution cost score and execution time score are both normalised against nominal values for a nominal resource (e.g. a resource which performs averagely in respect of execution cost and execution time), e.g. by dividing by the respective scores for such an "average" resource (e.g. dividing by 1000 for cost, and dividing by 100 for time), so that the execution cost and execution time scores do not dominate the efficiency and availability scores in the aggregate result. Thus, the normalised scores for the example resource are:
- Execution cost score:: 0.12 (after normalisation)
- Execution time score:: 0.2 (after normalisation)
- Availability score:: 0.6
- Efficiency score:: 0.7

In this example, a user sets weighting factors, e.g. by using the sliders 601-604 of Figure 6, to select the following:
- Cost weighting factor:: 0.3
- Time weighting factor:: 0.9
- Availability weighting factor:: 0.9
- Efficiency weighting factor:: 0.5

Clearly, since in this example the user has selected a relatively small cost weighting factor of 0.3, cost is considered of low importance to this user. Time and Availability are considered of high importance, since they have been assigned weighting factors of 0.9. Efficiency is considered of average importance, since it has been assigned a weighting factor of 0.5.

The attribute scores for each resource are aggregated using the following formula (or similar):
- aggregate resource score =: availability score * availability weighting factor + efficiency score * efficiency weighting factor - execution cost score * cost weighting factor - execution time score * time weighting factor
- =: 0.6*0.9 + 0.7*0.5 - 0.12*0.3 - 0.2*0.9
- =: 0.674

The calculation is repeated for each resource, and the smart process manager is provided with the results such that it can choose the most favourable resources (i.e. those having the highest resource scores). Optionally one or more attribute scores can be processed by applying a threshold before being multiplied by the corresponding weighting factor, e.g. the execution cost score can be set to 0 if below a user-defined threshold or 1 if above or equal to the threshold. If the result of applying the threshold is chosen as 0 or 1 in this way then it will not be necessary to normalise the corresponding attribute score. Furthermore, in a further optional embodiment, instead of applying a single threshold test, the one or more of the attribute scores can be quantized by applying a plurality of threshold tests, e.g. setting the pre-processed attribute score to 0 if the attribute score is less than 0.3, setting to 0.5 if between 0.3 and 0.7, and setting to 1 if between 0.7 and 1.

Optionally, at step 340 the uncertain information is identified before carrying out the aggregation operation of step 350, such that the aggregation operation can be carried out only on the identified uncertain information. By implication, information which has not been identified as uncertain is deemed to be certain, and by not applying the aggregation operation to information which is certain (which thus does not require transformation in order to be useable with an HTN-SPM), processing effort is reduced and efficiency is increased.

At step 360 the transformed information (i.e. the resource score for each resource) is provided to a smart process manager for use in determining which resources to select for carrying out a mission. Optional step 370 is the same as optional step 270 described with reference to Figure 2.

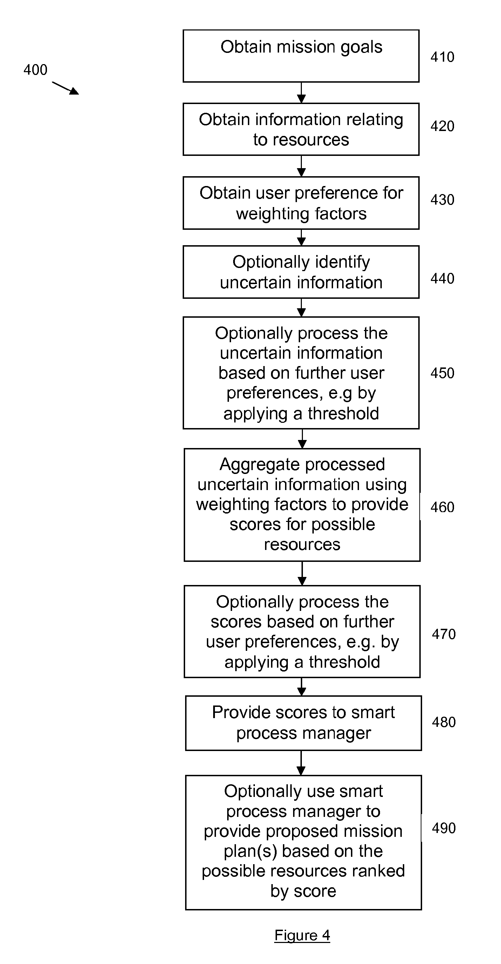

In an embodiment as described herein with reference to Figure 4, mission goals are obtained at step 410, information relating to one or more resources that may be used during execution of the mission is obtained at step 420, and user preferences for respective weighting factors are obtained at step 430, similarly to steps 310, 320 and 330 of the embodiment described above with reference to Figure 3. Optionally, at step 440, uncertain information is identified, similarly to step 340 of the embodiment of Figure 3. At step 460, for each resource, an "aggregation" operation is carried out on the scores relating to the respective resource, at step 480 the resource scores are provided to a smart process manager, and optionally at step 490 the smart process manager is used to produce one or more candidate mission plans, similarly to steps 350, 360 and 370 of the embodiment of Figure 3.

The embodiment of Figure 4 is thus similar to, but optionally enhanced over the embodiment of Figure 3, by the inclusion of one or both of optional steps 450 and 470. In optional step 450 the information relating to the one or more resources is pre-processed by pre-processing engine 1230 before being operated on by transformation engine 1240 according to the "aggregation" operation of step 460. As described above with reference to step 350 of Figure 3, the attribute scores for a particular resource can be normalised and/or converted to 0 or 1 by testing against a threshold, before inclusion in the aggregation calculation (however this may be unnecessary, for example if the attribute scores are provided pre-normalised in the range 0 to 1). The pre-processing comprises one or more of the aforementioned quantizing, the aforementioned normalising and/or pre-scaling at least one of the attribute scores (relating to efficiency, availability, execution cost and execution time). As noted, a "thresholding" operation essentially quantizes a value into two ranges (i.e. above or equal to the threshold and below the threshold). Clearly, the pre-processing can include a thresholding operation similar to that of step 250 of the embodiment of Figure 2. By extension it will be appreciated that multiple thresholds (each at progressively higher levels) can be applied, so as to quantize the scores into more than two ranges. As described previously, thresholding/quantizing reduces uncertainty in the scores, and by adjusting the number of quantization steps a trade-off can be made between score resolution and uncertainty. Normalising can be applied to the scores (for example by dividing each score by a maximum value for that respective score, or by a nominal value for that score, e.g. the value of that score for a nominal "average" resource), thereby ensuring that the value of each score is in a range between 0 and 1, such that all scores contribute equally to the aggregate result (resource score) in the absence of differences in the weighting factors. Pre-scaling can optionally be applied, advantageously after normalising, by multiplying a particular attribute score by a constant, thereby allowing control of the relative influence of that particular attribute score in the aggregate result (the "resource score") of the "aggregation" operation. In this way, a bias (independent of user weighting factor selections) towards greater or lesser importance of one or more attribute scores can be introduced.

Optionally at step 470 the resource score which is the result of the aggregation step 460 (i.e. the output of transformation engine 1240) can be post-processed by post-processing engine 1250. For example, a thresholding or quantization operation can be applied to the respective aggregate result (resource score) for each resource. In this way, the certainty of the transformed information which is passed to the smart process manager 1260 can be further increased. Furthermore, resources having resource scores which fall below a lower threshold can be completely withheld from being passed to the smart process manager 1260, thereby reducing the number of resources needed to be considered by the smart process manager 1260 and thereby saving processing effort and increasing efficiency.

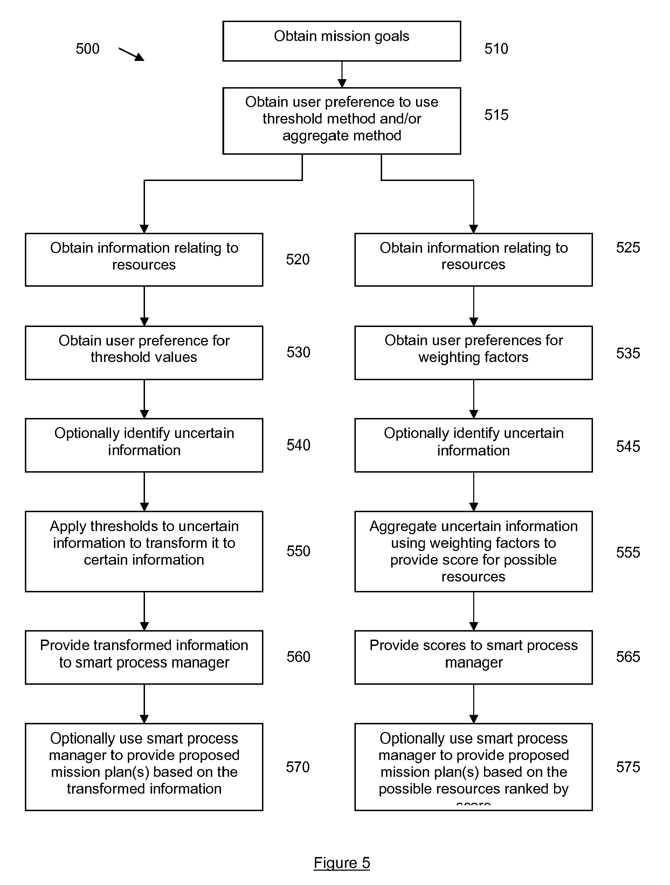

In an embodiment as described with reference to Figure 5, at step 515 a user is given the choice to choose between the "threshold" method described above with reference to Figure 2 and the "aggregation" method described above with reference to Figures 3 and 4. Steps 520, 530, 540, 550, 560 and 570 are substantially the same as steps 220, 230, 240, 250, 260 and 270. Steps 525, 535, 545, 555, 565 and 575 are substantially the same as steps 320, 330, 340, 350, 360 and 370.

Thus it is clear that features of the described embodiments can be combined in any way as is clear from the details described herein, and that not all steps of each embodiment are essential unless described as being so. In embodiments, either of the "threshold" method or the "aggregation" method can be omitted such that only the remaining method is available for selection. In such embodiments the step of selecting one or other of those methods can be omitted when only a single option remains for selection. Alternatively, the "threshold" operation of step 550 and the "aggregation" method of step 555 can be serially combined within transformation engine 1240, with either operation preceding the other, and the composite result of both operations being passed to the smart process manager 1260.

Shown in Figure 6 is a Graphical User Interface (GUI) which may be the User Interface 1220 of Figure 12, which may be implemented using a computer and a display, and with which a user may interact using input means such as a keyboard, mouse/trackball and/or touchscreen. In an embodiment the GUI comprises selectable buttons 600 and 606 for selecting one, or other, or both of the "aggregation" method and the "thresholding" method. In certain embodiments the buttons 600, 606 can be mutually exclusive such that the option of having both methods selected is excluded.

The GUI further comprises a region associated with the aggregation selection button 600, having sliders 601-604 which are slideable by a user to set the aforementioned respective weighting factors to be applied to each of the attribute scores (execution cost score, execution time score, availability score and efficiency score) for each resource. Of course, other common Graphical User Interface controls can be used instead or as well.

The GUI also comprises a region associated with the thresholding selection button 606, having an alphanumeric entry field for setting at least one threshold value. In the illustrated example there is a single field 607 for entering a threshold level (e.g. in terms of a percentage of full range, or in terms of an absolute value) to be applied to all of the attribute scores. In other embodiments, separate fields may be provided corresponding with each of the attribute scores. In other embodiments, instead of one or more alphanumeric entry fields, sliders may be provided for setting the threshold value(s).

In certain embodiments, the GUI optionally also comprises a control 605 for a user to indicate the optimism with which an assumed location of resources should be regarded. In the shown embodiment, this location optimism control 605 is a triplet of selection buttons by which a user can select "optimistic", "average" or "pessimistic" choices, however other input means and other numbers of subdivisions can be used. Further, although in the shown embodiment the location optimism control 605 is illustrated as being associated with the "aggregation" method controls, this need not be the case and the selected optimism can have relevance to not only the "aggregation" method but also to the "threshold" method.

In an embodiment as described herein with reference to Figure 7, the execution time score and execution cost score for a resource is optionally derived from the assumed location of the resource and the user-indicated optimism with which assumed location is to be regarded. At step 710, information relating to the mission is obtained, including an assumed location of each resource under consideration for inclusion in the mission. At step 720, user preferences are obtained as to the optimism with which the assumed location of resources is to be regarded. At step 730, the execution time score and/or execution cost score for at least one resource is derived at least partly using the assumed resource location and the indicated optimism. At steps 740 and 750, the derived execution time score and execution cost score are provided to the method of any of the previously described embodiments, and the method of that one of those embodiments is carried out.

The derivation of time and/or cost information according to step 730 is carried out as follows. For each resource under consideration for possible selection by the smart process manager 1260 for carrying out a particular mission step (as part of a mission plan for accomplishing mission goals), that resource has an assumed location (e.g. a geographical location at which the resource is assumed to be currently located). In order to carry out the particular mission step, the resource will need to be located at a target location which is where the mission step will be carried out, and which may or may not be the resource's current location. If the resource is not currently at the target location then the resource will need to move to the target location before it can commence carrying out the mission step. Moving a resource takes time and money, and therefore the execution time score and execution cost score for that resource will be at least partly influenced by the distance between the resource's assumed current location and the target location. For example, the execution cost may comprise a fixed component related to staffing costs, resource purchase costs etc., and may also include variable fuel costs which depend on the distance travelled when moving the resource to the target location. The target location may be a fixed, known geographical location (e.g. a location on a map) having no inherent uncertainty, or alternatively the target location may be the location of an object which is incompletely known and thus includes some uncertainty. Thus, one or both of the resource and the target location include uncertainty. In order to derive the execution cost score and the execution time score, firstly the distance between the resource and the target location is determined, based on: the assumed location of the resource; the target location; and the user-selected optimism with which the assumed location of resources is to be regarded.

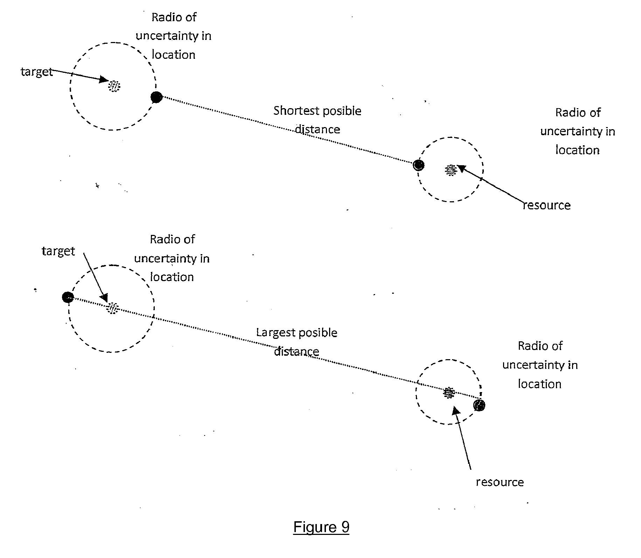

As shown in the upper example shown in Figure 9, each of the target 910 and resource 920 have an assumed location (respectively, the dot markers pointed to by the arrowed labels "target" and "resource"), and also a respective radius of uncertainty relating to each of the assumed locations (e.g. the estimated possible error in the assumed location). Each radius of uncertainty defines a circumference enclosing a circular area having at its centre the respective assumed location, somewhere within which the resource is assumed to be located. In the upper example in Figure 9, the user has selected an "optimistic" view of assumed resource location, in which case the method calculates the shortest possible distance between the resource and the target by plotting the distance between the least distant respective points on the circumference around the target and the circumference around the resource. In the lower example in Figure 9 the user has selected a "pessimistic" view of assumed resource location, in which case the method calculates the longest possible distance between the resource and the target by plotting the distance between the most distant points on the circumference around the target and the circumference around the resource, respectively. In the case where the user selects an "average" level of optimism then the method simply calculates the distance between the assumed resource location and the assumed target location. In cases where the target location is completely known then accordingly the radius of uncertainty associated with the target location is zero and thus all points on the circumference around the target are coincident with the assumed target location.

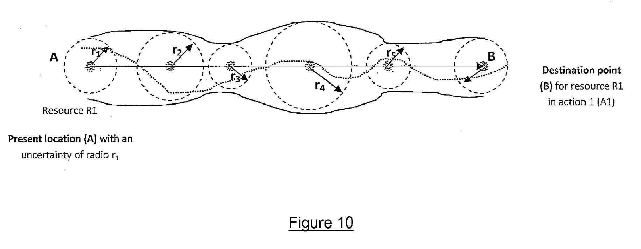

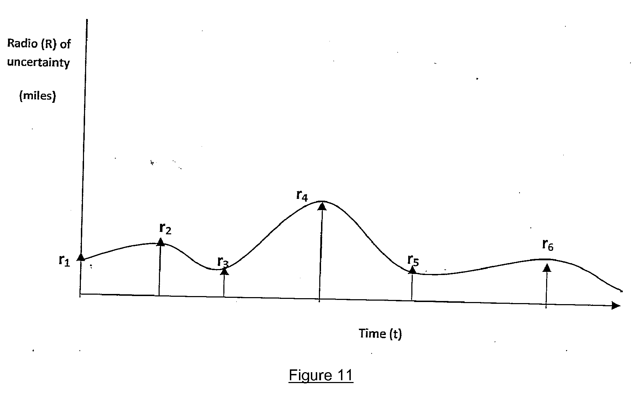

In the embodiment described with reference to Figure 8, the method of Figure 7 is extended so as to take account of a radius of uncertainty of an assumed location of a resource, which radius changes as the resource executes mission steps and thus moves its location over time. Figure 10 illustrates an example of how the radius of uncertainty in an assumed location of a resource R1 changes as the resource executes mission steps and moves from a first location A to a destination location B in a series of 5 movements. Initially, the radius of uncertainty is r1. After the resource moves (e.g. as a result of executing a mission step) from the first location A to the second location, which is immediately to the right of location A in the Figure, the new radius of uncertainty r2 has increased compared with the initial radius of uncertainty r1 (i.e. r2 > r1). With each successive move, the successive radii of uncertainty r3, r4, r5 will vary. Note that although the radius of uncertainty might be expected to always increase over time (e.g. due to location drift, subject to tides and sea currents etc. in a marine example, or due to dead-reckoning calculation and/or measurement errors in a land-based example) it is not necessarily always the case that the radius of uncertainty increases with each movement, since for example the resource may pass near to a monitoring station or be periodically locatable by some feedback means which allows the actual location of the resource to be ascertained more accurately than at an earlier time, in which case the radius of uncertainty will shrink. When the resource arrives at destination point B, for example, the fact of the arrival of the resource at the destination point B may be verifiable, and thus the resource may inherit the radius of uncertainty of the destination location. Figure 11 shows a graphical representation of how the radius of uncertainty of a resource (the resource shown in Figure 10) can vary against time in an example situation.

Returning to Figure 8, steps 810 to 850 are the same as steps 710-750 of Figure 7. The method of Figure 8 continues with step 860 in which a mission plan is selected for execution from the one or more candidate mission plans generated by the smart process manager 1260 at step 850. At step 870 at least a part (i.e. at least one mission step) of the selected mission plan is executed, which will usually involve at least one resource being used in the execution of the at least one mission step, and as a result that at least one resource may move from an initial assumed location A with radius of uncertainty r1, to a second (updated) assumed location with an updated radius of uncertainty r2 (as shown in Figures 10 and 11). At step 880, the updated assumed location and updated radius of uncertainty r2 are determined, and at step 890 those updated assumed location and updated radius of uncertainty r2 are propagated into a further iteration of the method, re-starting at step 830 where updated execution time and execution cost scores are derived based upon the updated assumed resource location and the updated radius of location uncertainty. Optionally, any updates to a resource's efficiency score and/or availability score which have resulted from the execution of one or more mission steps using that resource are also propagated into the further iteration of the method, re-starting at step 830 (in one embodiment the resource's efficiency will remain unchanged, being a function of the type of resource, and the resource's availability will become "1 = available" due to the device having just been used and therefore being known to be available; however in another embodiment the resource's efficiency can be updated to reflect wear and tear, and the resource's availability can be updated to mark the device as unavailable if, for example, it has run out of fuel). Using the updated resource attribute scores, the method is able to calculate more up-to-date (and thus more accurate) transformed information for provision to the smart process manager 1260 for producing successive updated candidate mission plans. Thus, the effectiveness with which mission goals can be achieved is improved.

Figure 12 shows a system 1200 comprising a number of interconnected modules, which can be implemented in hardware and/or software, or by a combination of the two, so as to carry out the above-described methods. As referred to in the preceding passages, User Interface 1220 is a module implementing a user interface, e.g. a Graphical User Interface (GUI) of the form shown for example in Figure 6, via which a user can input preferences and via which the user can optionally view output results from the described method (such as one or more proposed candidate mission plans produced by the smart process manager 1260). Resource Attribute and Mission Goals Store 1210 comprises a memory for storing the information relating to the resources (i.e. including the resource attribute scores) and/or the mission goals. In other embodiments the resource attribute scores and/or mission goals can be provided by other means such as over a computer network or via a user interface such as a GUI. Transformation Engine 1240 is arranged to carry out the transformation method described above with reference to Figures 1 to 5, which transform the resource attribute scores into transformed information for provision to Smart Process Manager 1260. Transformation Engine 1240 is also optionally arranged to carry out the method described with reference to Figures 7 and 8. Smart Process Manager 1260 is for example an existing HTN type of SPM. Optional Pre-processing engine 1230 is arranged to carry out the pre-processing of resource attribute scores, e.g. as described with reference to steps 440, 450 of Figure 4. Optional Post-processing engine 1250 is arranged to carry out the optional operations described with reference to step 470 of Figure 4.

Examples of applications of the methods described herein include emergency response planning and critical infrastructures protection. For example, in an emergency response situation (such as a vehicle accident, natural catastrophe or manmade threat situation), when the emergency is first detected a plan has to be devised which will likely involve resources such as ambulances, medical teams, hospitals and police etc. In a typical scenario, parties involved in the emergency may need to be collected from the location of the emergency, transported to a reception centre or hospital, and then processed by medical teams and/or police. Such a scenario typically requires the effective coordination of all parties involved, and for such an effective coordination to take place the methods described herein will be invaluable. For example, in a real-world emergency response situation, there might be a lost connection between the call centre receiving the emergency call and one of the emergency teams (medical, police, sea-rescue), and thus the exact location and availability of that resource may not be completely known, i.e. uncertain. By applying the above-described "threshold" and/or "aggregation" methods, the smart process manager is able to more effectively choose which resources should be used for producing a mission plan directed at responding to the emergency. Particularly, the aggregate method allows greater weight to be placed on certain resource attributes (such as availability) than other attributes (such as efficiency) and so allows the smart process manager to produce a plan which is weighted towards a particular goal (such as reliably responding, as opposed to quickly or efficiently responding). In other words, depending on the requirements it may be desirable to select less efficient resources for which there is more certainty of their availability, such as firemen trained in first aid, rather than very well trained medical staff which are very unlikely to be available. The described method provides for such a trade-off to be made, as appropriate for the circumstances.

By way of further example, consider the case where an incident alarm is activated in a power plant. According to the type of alarm, speed or alternatively efficiency of response may be paramount, and a plan involving resources such as autonomous robots and/or unmanned vehicles, fire brigades, medical staff etc. may need to be devised to respond to the particular situation. The method described herein can be used to assist in such a situation.

The present invention, in embodiments, can be computer-implemented by execution of program steps by a computer system having a processor. An example computer system suitable for implementing the above-described schemes is illustrated in Figure 13.

Figure 13 schematically illustrates an example computer system 1300 comprising a computer network 1330 and device 1310 according to an embodiment of the invention, in which the described methods may be deployed.

A device 1310 on which all or part of the described method is implemented may be arranged so as to communicate with other devices 1320 which may implement all or a remaining part of the method, over the network 1330. For example, one or more of the other devices 1320 may supply input knowledge relating to one or more resources to the device 1310. For example, one or more of the other devices may comprise hardware and/or software for: collecting input knowledge relating to one or more resources; processing that input knowledge; and sending processed input knowledge to a device 1310 which may comprise a smart process manager, in embodiments of the invention. The network 1330 may be any kind of network suitable for transmitting or communicating data. For example, the network 1330 could comprise one or more of a local area network, a wide area network, a metropolitan area network, the internet, a wireless communications network, a cable network, a digital broadcast network, a satellite communication network, a telephone network, etc. The device 1310 may be arranged to communicate over the network 1330 using any suitable communication mechanism/protocol in order to communicate data. It will be further appreciated that other communication scenarios are possible. For example, the input data values may be provided via a physical medium (such as a CD, DVD, BluRay disc, etc.), or manually entered e.g. via a keyboard, in which either case all or part of the system 1300 may be omitted. In a similar manner, any of the devices shown in Figure 13 may provide or receive data using physical media instead of via the network 1330, in which case a corresponding part of the system 1300 may be omitted.

The device 1310 may comprise one or more computing devices 1400 as shown in Figure 14 which schematically illustrates an example of such a computing device 1400. The computing device 1400 comprises a computer 1402. The computer 1402 comprises: a storage medium 1404, a memory 1406, a processor 1408, a storage medium interface 1410, a user output interface 1412, a user input interface 1414 and a network interface 1416, which are all linked together over one or more communication buses 1418.

The storage medium 1404 may be any form of non-volatile data storage device such as one or more of a hard disk drive, a magnetic disc, an optical disc, a ROM, etc. The storage medium 1404 may store an operating system for the processor 1408 to execute in order for the computer 1402 to function. The storage medium 1404 may also store one or more computer programs (or software or instructions or code) that form part of an embodiment of the invention. The memory 1406 may be any random access memory (storage unit or volatile storage medium) suitable for storing data and/or computer programs (or software or instructions or code) that form part of an embodiment of the invention. Such data may, for example, include the input knowledge relating to the one or more resources, as described herein. Such computer programs may, for example, include computer programs or computer program code for carrying out the method shown and described herein with reference to Figures 1 to 12, including any modifications or additional method steps as a skilled person would understand.

The processor 1408 may be any data processing unit suitable for executing one or more computer programs (such as those stored on the storage medium 1404 and/or in the memory 1406), some of which may be computer programs according to embodiments of the invention or computer programs that, when executed by the processor 1408, cause the processor 1408 to carry out a method according to an embodiment of the invention and configure the system 1400 to be a system according to an embodiment of the invention, such as the embodiment(s) described with reference to Figures 13 and 14, including any modifications or additional method steps as a skilled person would understand. The processor 1408 may comprise a single data processing unit or multiple data processing units operating in parallel or in cooperation with each other. The processor 1408, in carrying out data processing operations for embodiments of the invention, may store data to and/or read data from the storage medium 1404 and/or the memory 1406, such data being for example the input knowledge as described herein. Optionally, the processor 1408 may comprise, or be arranged to operate with, an arithmetic unit for assisting the processor 1408 in calculating the results of calculations such as the examples given in Table 1. For example, the arithmetic unit may operate on the input knowledge by applying weighting factors by multiplication or division or other arithmetic operation, as described herein with reference to the embodiments which carry out an "aggregation" method. The arithmetic unit may thus advantageously assist in the calculations performed in the described method.

The storage medium interface 1410 may be any unit for providing an interface to a data storage device 1422 external to, or removable from, the computer 1402. The data storage device 1422 may be, for example, one or more of an optical disc, a magnetic disc, a solid-state-storage device, etc. The storage medium interface 1410 may therefore read data from, or write data to, the data storage device 1422 in accordance with one or more commands that it receives from the processor 1408.

The user input interface 1414 is arranged to receive input from a user, or operator, of the system 1400. The user may provide this input via one or more input devices of the system 1400, such as a mouse (or other pointing device) 1426 and/or a keyboard 1424, that are connected to, or in communication with, the user input interface 1414. However, it will be appreciated that the user may provide input to the computer 1402 via one or more additional or alternative input devices (such as a touch screen). The computer 1402 may store the input received from the input devices via the user input interface 914 in the memory 1406 for the processor 1408 to subsequently access and process, or may pass it straight to the processor 1408, so that the processor 1408 can respond to the user input accordingly. The user is, for example, a user of a mobile device or tablet, or a user of a personal computer, who is viewing the input knowledge and/or the mission plan produced by the HTN SPM, and who may wish to interact with the device.

The user output interface 1412 is arranged to provide a graphical/visual and/or audio output to a user, or operator, of the system 1400. As such, the processor 1408 may be arranged to instruct the user output interface 1412 to form an image/video signal representing a desired graphical output, and to provide this signal to a monitor (or screen or display unit) 1420 of the system 1400 that is connected to the user output interface 1412. Such output may, for example, comprise details of a candidate mission plan, produced by the HTN SPM, to be considered and/or followed by the user in order that the mission goals can be achieved. Additionally or alternatively, the processor 1408 may be arranged to instruct the user output interface 1412 to form an audio signal representing a desired audio output, and to provide this signal to one or more speakers 1421 of the system 1400 that is connected to the user output interface 1412.

Finally, the network interface 1416 provides functionality for the computer 1402 to download data from and/or upload data to one or more data communication networks (such as the network 1330 of figure 13).

It will be appreciated that the architecture of the computing device 1400 illustrated in figure 14 and described above is merely exemplary and that other computing devices 1400 with different architectures (for example with fewer components than shown in figure 14 or with additional and/or alternative components than shown in figure 14) may be used in embodiments of the invention. It will also be appreciated that the device 1310 may use different kinds of computing device 1400. As examples: the computing device 1400 may be a computing device such as a mobile telephone; a tablet; a laptop; a television set; a set top box; a games console; a personal computer; a server computer, another mobile device or consumer electronics device, etc.

In certain embodiments, the illustrated and described separation of functionality and processing between the described elements is purely conceptual and is presented herein merely for ease of explanation. It will be appreciated that the methods described have been shown as individual steps carried out in a specific order. However, the skilled person will appreciate that these steps may be combined or carried out in a different order whilst still achieving the desired result.

It will be appreciated that embodiments of the invention may be implemented using a variety of different information processing systems. In particular, although the Figures and the discussion thereof provide an exemplary computing system and methods, these are presented merely to provide a useful reference in discussing various aspects of the invention. Embodiments of the invention may be carried out on any suitable data processing device, such as a personal computer, laptop, personal digital assistant, mobile telephone, set top box, television, server computer, etc. Of course, the description of the systems and methods has been simplified for purposes of discussion, and they are just one of many different types of system and method that may be used for embodiments of the invention. It will be appreciated that the boundaries between logic blocks are merely illustrative and that alternative embodiments may merge logic blocks or elements, or may impose an alternate decomposition of functionality upon various logic blocks or elements.

It will be appreciated that the above-mentioned functionality may be implemented as one or more corresponding modules as hardware and/or software. For example, the above-mentioned functionality may be implemented as one or more software components for execution by a processor of the system. Alternatively, the above-mentioned functionality may be implemented as hardware, such as on one or more field-programmable-gate-arrays (FPGAs), and/or one or more application-specific-integrated-circuits (ASICs), and/or one or more digital-signal-processors (DSPs), and/or other hardware arrangements. Method steps implemented in flowcharts contained herein, or as described above, may each be implemented by corresponding respective modules; multiple method steps implemented in flowcharts contained herein, or as described above, may together be implemented by a single module.

It will be appreciated that, insofar as embodiments of the invention are implemented by a computer program, then a storage medium and a transmission medium carrying the computer program form aspects of the invention. The computer program may have one or more program instructions, or program code, which, when executed by a computer carries out an embodiment of the invention. The term "program", as used herein, may be a sequence of instructions designed for execution on a computer system, and may include a subroutine, a function, a procedure, a module, an object method, an object implementation, an executable application, an applet, a servlet, source code, object code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM or a BluRay disc), or a memory (such as a ROM, a RAM, EEPROM, EPROM, Flash memory or a portable/removable memory device), etc. The transmission medium may be a communications signal, a data broadcast, a communications link between two or more computers, etc.

It will be appreciated that the invention has applications in many fields, particularly in fields where the input knowledge is of reduced quality/precision/certainty, and wherever input knowledge is incompletely or inaccurately known. Thus, the invention may find applications in industrial process, production, design and/or project planning, aeronautical maintenance planning, and/or logistics planning. In addition the invention may find use in medical/emergency response planning, critical infrastructure protection (CIP) planning, operations planning, and/or other mission planning operations.

Although embodiments have been disclosed in detail, a person skilled in the art will appreciate that not all features of each disclosed embodiment are essential for carrying out the invention, the features which define the invention being set out in the appended claims. The features of certain examples, aspects and embodiments may be combined and/or interchanged with those of other examples, aspects and embodiments, where appropriate, as would be understood by a skilled person reading the claims. The person skilled in the art will further appreciate that variations may be made to the above described embodiments without departing from the scope of the invention as defined by the appended claims.

## Claims

1. A computer-implemented method of processing information for use when producing a mission plan to accomplish a mission, the method comprising:
obtaining one or more mission goals to be achieved during execution of the mission;
obtaining information relating to one or more resources that may be used during execution of the mission, wherein the information relating to at least one of the resources includes uncertainty;
obtaining user preferences relating to how the uncertainty is to be handled;
transforming the information relating to the one or more resources according to the user preferences to reduce the uncertainty in the information; and
providing the transformed information to a smart process manager, for use by the smart process manager to identify one or more of the resources that may be used either alone or in combination to execute at least one mission step as part of at least one mission plan to achieve the one or more mission goals, thereby accomplishing the mission.

2. The method of claim 1 further comprising:
identifying, based on the transformed information, one or more of the resources that may be used in at least one mission step as part of at least one mission plan for accomplishing the mission goals;
producing, based on the identified resources, at least one mission plan for accomplishing the mission goals; and
providing the at least one mission plan to a user.

3. The method of claim 1 or 2 wherein the information for each resource comprises at least an execution time score that indicates the time for the resource to execute its part of the mission, an execution cost score that indicates the cost for the resource to execute its part of the mission, an availability score that indicates the level of availability of the resource to execute its part of the mission, and an efficiency score that indicates the level of efficiency of the resource when executing its part of the mission.

4. The method of claim 3, wherein:
the step of obtaining user preferences comprises obtaining one or more threshold values, each threshold value relating to one of the execution cost score, the execution time score, the efficiency score and the availability score; and
transforming the information comprises one or more of:
if a cost threshold value is obtained, transforming the execution cost score for each resource to an absolute indication of cost having two possible values corresponding to whether or not that resource is costly by comparing the execution cost score to the cost threshold value;
if a time threshold value is obtained, transforming the execution time score for each resource to an absolute indication of time having two possible values corresponding to whether that resource is fast or slow by comparing the execution time score to the time threshold value;
if an availability threshold value is obtained, transforming the availability score for each resource to an absolute indication of availability having two possible values corresponding to whether or not that resource is available by comparing the availability score to the availability threshold value; and
if an efficiency threshold value is obtained, transforming the efficiency score for each resource to an absolute indication of efficiency having two possible values corresponding to whether or not that resource is efficient or inefficient by comparing the efficiency score to the efficiency threshold value.

5. The method of claim 4 wherein the smart process manager identifies as useable, to execute the at least one mission step as part of the at least one mission plan, only resources having at least one of and preferably all of: an absolute indication of availability indicating that the resource is available; an absolute indication of efficiency indicating that the resource is efficient; an absolute indication of execution cost indicating that the resource is not costly; and/or an absolute indication of execution time indicating that the resource is not slow.

6. The method of claim 3, wherein:
the step of obtaining user preferences comprises obtaining weighting factors to be applied to one or more of the execution time score, execution cost score, availability score and efficiency score; and
the step of transforming the information relating to the one or more resources according to the user preferences to reduce the uncertainty in the information comprises aggregating the execution time score, execution cost score, availability score and efficiency score for each resource as a weighted combination using the weighting factors thereby providing an overall resource score for each resource, and the transformed information comprises the overall resource score for each resource.

7. The method of claim 6 wherein providing the transformed information comprises providing to the smart process manager only the transformed information of those resources which have an overall resource score greater than a resource score threshold value, such that only resources having an overall resource score greater than the resource score threshold can be considered by the smart process manager for inclusion in the at least one mission plan.

8. The method of any one of claims 6 to 7 further comprising, for each of the at least one mission plan, totalling the resource scores for each of the resources used in the respective mission plan to produce a respective mission score associated with that mission plan.

9. The method of claim 8 further comprising providing the at least one mission plan to a user, ranked in an order based upon the associated mission score for each mission plan.

10. The method of claim 8 or 9 wherein:
only those mission plans having an associated mission score which is greater than a mission score threshold value are provided to the user.

11. The method of any one of claims 3 to 10, wherein for each resource:
the information relating to that resource comprises an assumed location of that resource; and
obtaining information comprises deriving at least one of the execution time and the execution cost for a respective resource using the assumed location of that resource.

12. The method of claim 11, wherein:
each assumed location has an associated radius of uncertainty;
obtaining user preferences further comprises obtaining from the user an indication as to the optimism to be associated with the assumed locations; and
wherein the deriving is further based upon the indicated optimism and a respective radius of uncertainty associated with the assumed location of the respective resource.

13. The method of claim 12, wherein, for each resource:
if indicated as most optimistic, the calculating comprises calculating a minimum possible execution time and/or a minimum possible execution cost, based on that resource's assumed location, that resource's associated radius of uncertainty, and a location of a target which is involved in the mission; and
if indicated as least optimistic, the calculating comprises calculating a maximum possible execution time and/or a maximum possible execution cost, based on that resource's assumed location, that resource's associated radius of uncertainty, and a location of a target which is involved in the mission.

14. The method of any one of claims 12 to 13, further comprising the steps of:
executing a mission step of the at least one mission plan;
updating at least one of the assumed location and the radius of uncertainty for at least one resource which was used in the executed mission step; and
based on the updated assumed location and/or radius of uncertainty of the assumed location, providing updated information to the smart process manager for production of a further mission step and/or an updated mission plan based on the updated assumed location and/or radius of uncertainty of the assumed location.

15. The method of any preceding claim further comprising identifying which of the obtained information relating to at least one of the resources includes uncertainty, and wherein the transforming comprises transforming only the identified information.

16. A system comprising a processor and a memory, the memory storing instructions which when executed by the processor cause the processor to carry out the method according to any preceding claim.

17. A computer program comprising instructions which, when executed by a processor, cause the processor to carry out the method according to any one of claims 1 to 15.

18. A computer-readable medium storing instructions which when executed by a processor cause the processor to carry out a method according to any one of claims 1 to 15.
